# DEMANDE DE BREVET EUROPEEN

(11) **EP 0 864 252 A1**
(43) Date de publication de la demande: **16.09.1998**
(21) Numéro de dépôt: 97390003.8
(22) Date de dépôt: 14.03.1997
(51) Int. Cl.: A01K 31/06

(54) **Systeme de cage modulaire et démontable de présentation a la clientèle d'oiseaux vivants**

(71) Demandeur: AB7 Industries SA, 31450 Deyme (FR)
(72) Inventeur: Chelle, Rene, AB7 Industries SA, 31450 Deyme (FR)

(57) **Abrégé**

La présente invention décrit un système d'habitat pour les oiseaux présentés à la vente dans les magasins d'animalerie constituée d'une structure métallique classique qui supporte des cages amovibles. Les parois en tout ou partie sont en verre alors qu'elles sont habituellement en grillage. Le verre permet un meilleur nettoyage et une meilleure désinfection.

## Description

Pour être présentés à la clientèle, les animaux de compagnie bénéficient de systèmes d'habitat en magasin où ils pourront séjourner le temps de leur mise en vente. Ces systèmes d'habitat, pour les oiseaux, sont des cages placées côte à côte et en superposition. On appelle un ensemble de cages de ce type une "batterie oiseaux".

Les batteries oiseaux sont habituellement réalisées dans une architecture rigide d'aluminium ou de fer sur laquelle viennent se fixer des grillages sur les six côtés d'une cellule pour former une cage où sera présenté un animal, un couple ou pour les petits oiseaux, un collectif de même race. L'intérieur de ces cages est donc visible par les clients qui, dans les magasins, se promènent en regardant la face avant. Sur l'arrière, des portes sont pratiquées dans la grille pour donner accès à l'intérieur de la cage et permettre ainsi de saisir l'oiseau, nettoyer l'intérieur de la cage, et autres opérations utiles (Fig. I).

Au-delà de l'aspect présentation à la clientèle, une batterie oiseaux doit répondre à des exigences précises de sécurité et de santé qu'impose la proximité de nombreux oiseaux de races et d'origines diverses. Deux impératifs essentiels sont à prendre en compte :
I. Que l'intérieur des cages soit aisément accessible pour toutes les opérations d'approvisionnement et de maintenance;
II. Que le nettoyage et la désinfection soit aisés et efficaces.

Dans les solutions à base de grilles ou de grillage, ces impératifs sont quasi impossibles à atteindre car le plus souvent les grilles sont fixes et très difficiles de nettoyage, compte tenu de l'extrême rugosité des matériaux de fabrication, de l'existence de jointures soudées qui présentent des cavités et compte tenu de l'instabilité même des matériaux (oxydation, par exemple).

Notre innovation vise à éliminer ces difficultés, notamment de maintenance, de nettoyage et de désinfection en :
- concevant une cage modulaire que l'on peut extraire de la batterie.
- généralisant l'usage du verre qui est un matériau stable, lisse et bien sûr.
   - parfaitement transparent, ce qui permet aux clients de voir parfaitement les oiseaux à l'intérieur.
   - facile à nettoyer, très résistant aux agents d'entretien. L'usage de produits très efficaces tels que agents détergents et de désinfection est donc parfaitement possible.

Dans notre innovation, le système global se présente comme suit :
- Une structure métallique assure la tenue mécanique de la batterie (Fig. II).
- Des logements sont prévus où l'on vient placer une cage entièrement réalisée en verre : les parois de verre sont au préalable collées entre elles par un cordon de colle silicone.
   - une des faces de la cage de verre comporte une ouverture d'accès permettant de saisir les oiseaux et de pratiquer les nettoyages (Fig. III).
   - un équipement intérieur mobile peut être placé dans la cage pour réaliser perchoirs, mangeoires et récupérateur de déchets;
   - les parois de verre latérales peuvent être rendues opaques pour que les oiseaux des cages contiguës ne se gênent pas. Cela peut être aisément réalisé par de la peinture ou par des techniques de sérigraphie qui permettent de plus d'agrémenter la vision du client.

La cage peut être retirée pour nettoyage à pleines eaux.

La cage peut comporter des séparations amovibles en acrylique, verre ou grillage (Fig. IV).

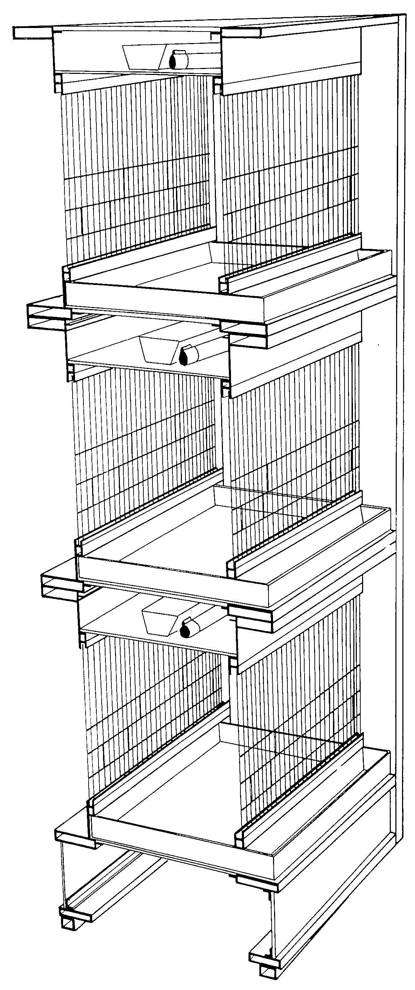

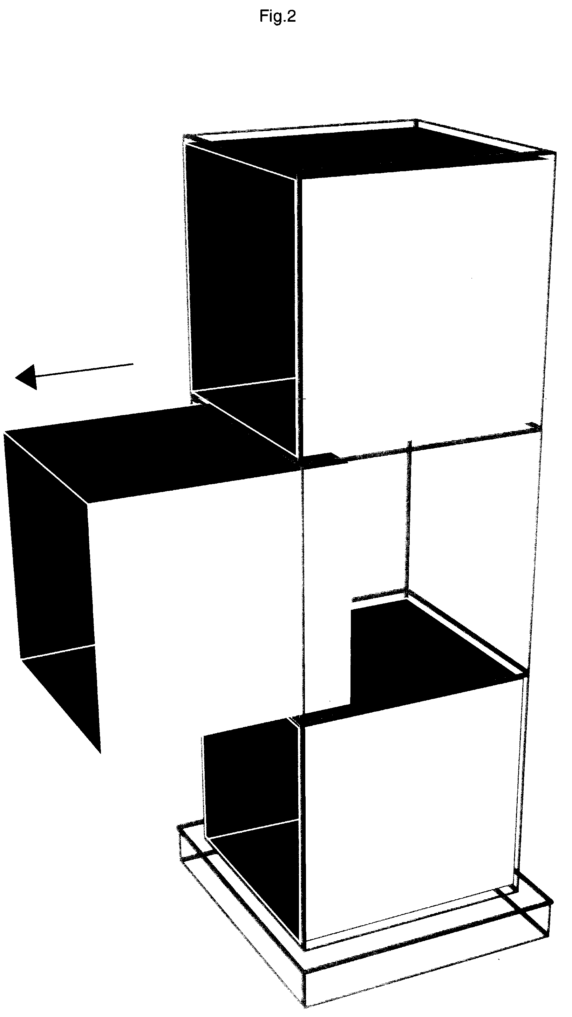

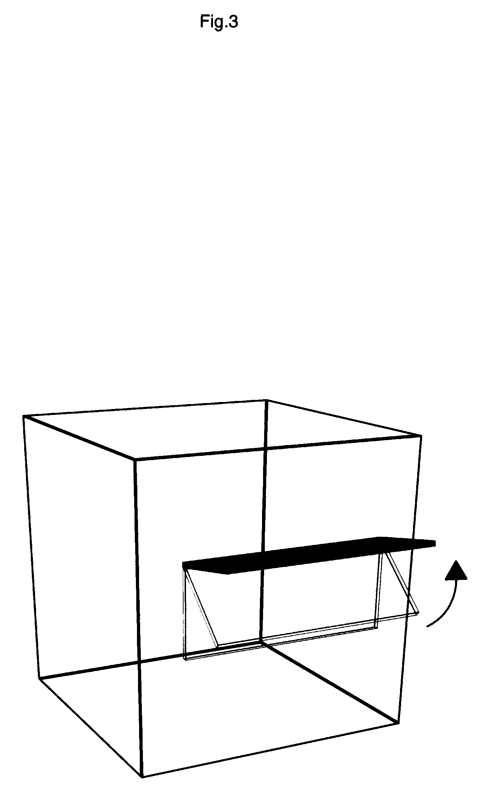

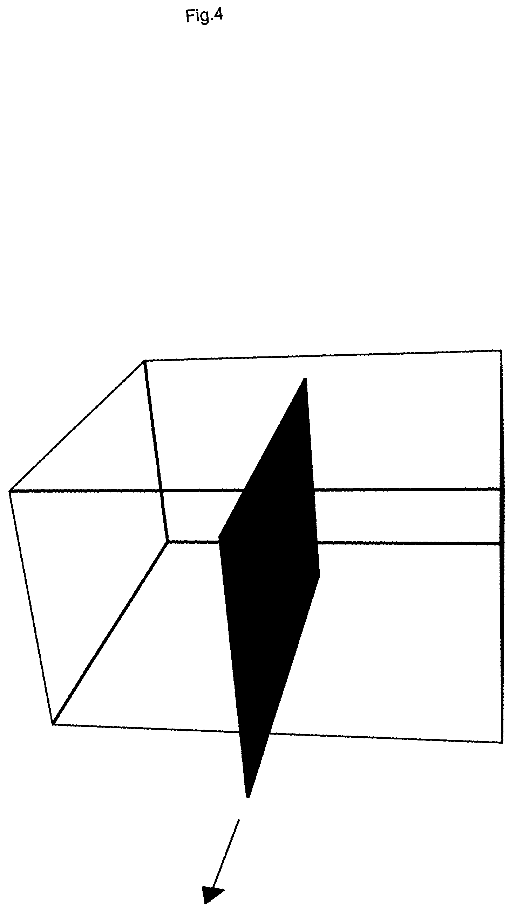

## Revendications

1. Système de cages de verre pour "batterie modulaire oiseaux" comportant des cuves étanches en verre , placées dans une structure mécanique, cuves qui peuvent être nettoyées soit in situ sur la batterie soit ex situ à grande eau par dépose de la cage.

2. Dispositif d'accès, selon la revendication 1, caractérisée par le fait que la face arrière de la cage comporte une porte à rabat ou à glissière, permettant d'accéder à l'intérieur de la cage.

3. Dispositif d'accès, selon les revendications 1 et 2, caractérisé par le fait que la face arrière ou avant peut être grillagée et amovible.

4. Système de cages selon les revendications 1, 2 et 3, caractérisé par le fait de pouvoir partager une cuve par des séparations amovibles en acrylique verre ou des grillages.
